# EUROPEAN PATENT APPLICATION

(11) **EP 1 185 014 A2**
(43) Date of publication of application: **06.03.2002**
(21) Application number: 01402005.1
(22) Date of filing: 25.07.2001
(51) Int. Cl.: H04J 3/08, H04J 3/14

(54) **Method of managing time slot interchange in classic MS-Spring networks**

(30) Priority: 29.08.2000 IT MI201919
(71) Applicant: ALCATEL, 75008 Paris (FR)
(72) Inventor: Sestito, Vincenzo, 20127 Milano (IT)
(74) Representative: Colombo, Stefano Paolo

(57) **Abstract**

A method of managing the change of time slot allocation in classical MS-SP ring networks. In two-fiber rings, the criterion for choosing the low priority AU-4 to be used for the protection in case of simple failure can be summarized as follows: given an STM-n ring line signal, where "n" is the overall number of the handled channels, there results that LP AU-4#X_{LP} = AU-4 #(X_{HP} + n/2), where X is the HP AU-4 index in the failured span. In four-fiber rings, AU-4 LP = AU-4 #X HP. Should two or more failures occur, criteria are provided for selecting one of the failured spans and tracing the problem back to the case of single two/four fiber ring failure.

## Description

The present invention relates to a method of managing time slot interchange in ring networks protected by a classic (or terrestrial) MS-SPRING protection mechanism.

In SDH MS-SPRING (Multiplex Section Shared Protection Ring) networks, a shared protection mechanism is implemented, which mechanism allows for the automatic restoration of the traffic in case of defects or failures in the connection fibers. In other words, the MS shared protection ring networks perform the automatic restoration of the traffic through a synchronized re-routing of said traffic, performable at each node of the ring. This operation is controlled by a protocol consisting of messages that are continuously interchanged between adjacent nodes. Said protocol and the related operations are defined by several international standards issued by ANSI, ITU-T and ETSI and they are characterized by a set of rules and messages. See, for instance, Recommendation ITU-T G. 841.

Protection in an MS shared protection ring network is implemented according to a so-called Bridge and Switch technique that consists essentially in re-routing the traffic, by means of an appropriate modification in the internal connections of the network elements, switching it from the working capacity to the protection capacity. The protection in an MS shared protection ring network is a multiplex section-oriented protection mechanism, i.e. the events defining the traffic restoration and the hierarchy that regulates those events are given at multiplex section level. In the "classic" (or terrestrial) MS shared protection rings, in the event of a failure, the whole high-priority line capacity is re-routed by utilizing the corresponding low-priority line capacity; in the transoceanic MS shared protection rings, on the contrary, only the paths affected by a failure are selectively re-routed.

It is also known that the ring networks provide for a mechanisms termed "Time Slot Interchange", in short TSI. TSI means, for instance, that when traffic is configured in a given ring network, such a traffic, which is carried in the associated STM-n and hence in the AU-4 contained in the STM-n, is allowed to travel through a network element occupying different AU-4 numbers at the input and at the output. Consider for instance a maximum capacity of a four-fiber ring, composed of sixteen AU-4s. The TSI mechanism allows one to enter a network element (of pure transit and where no termination occurs) with AU-4#X from its West side (W) and to go out from its East side (E) with an AU-4#Y, where X≠Y = 1, 2, ..., 16. The advantage is a higher flexibility in the traffic allocation and a very efficient exploitation of the band.

At present, performing TSI in ring networks protected by an MS-SPRING protection mechanism is not known. In particular, it is not known to perform allocation changes in classical or terrestrial MS shared protection ring networks.

It is, therefore, the main object of the present invention to provide a method that allows the execution of allocation changes in classical (two- or four-fiber) rings protected by an MS-SPRING mechanism. This and further objects are achieved by a method having the features set forth in independent claim 1 and a network element having the features set forth in independent claim 10. The respective dependent claims define further advantageous characteristics of the invention itself. All the claims are intended to be an integral part of the present description.

The basic idea of the present invention consists essentially in protecting the high priority traffic by assigning, in the event of a single ring failure, the low priority channel time slots chosen according to the actual failure location; and also by assigning, in the event of double (or multiple) ring failure, the time slots of the low priority channels chosen according to a suitable criteria.

The invention will certainly become clear in view of the following detailed description, given by way of a mere non limiting and exemplifying example, to be read with reference to the attached figures, wherein:
- Fig. 1 shows a two-fiber ring network in a stable situation free of failures, the network having a plurality of nodes, two installed paths and some allocation changes;
- Fig. 2 shows the same ring network of fig. 1 just after a ring failure took place;
- Fig. 3 shows the Bridge & Switch action performed at the switching nodes of the ring network of Fig.2;
- Fig. 4 shows a four-fiber ring network in a stable situation free of failures, the network having a plurality of nodes, two installed paths and some allocation changes;
- Fig. 5 shows the same ring network of Fig.4 just after a ring failure took place;
- Fig. 6 shows the Bridge & Switch action at the switching nodes of the ring network of Fig.5;
- Fig. 7 shows a two/four-fiber ring network in a stable situation free of failures, the network having a plurality of nodes, only one path installed and two allocation changes;
- Fig. 8 shows the network of Fig. 7 in the event of double failure with corresponding isolation of a node and the definition of two sub-networks;
- Fig. 9 shows a possible criterion for protecting the path of Fig. 8;
- Fig. 10 shows a two/four-fiber ring network in a stable situation free of failures, the network having a plurality of nodes, two installed paths and some allocation changes;
- Fig. 11 shows the network of fig. 10 in the event of double failure with corresponding isolation of two nodes and the definition of two sub-networks;
- Fig. 12 shows a possible criterion for protecting the paths of fig. 11; and
- Fig. 13 shows a possible representation of permutation table.

Throughout the various figures, a classical (or terrestrial) two- or four-fiber telecommunications ring has been always schematically depicted.

The STM-16 line capacity that is taken into consideration is referred to by way of a mere example and not of limitation: the considerations made are, in fact, to be intended as applicable to "classical" (or terrestrial) MS shared protection rings independently of the line capacity supported by the ring itself. Moreover, the cited examples do not consider the presence of possible extra-traffic that is configurable in the low-priority channels and is present when the ring is in the "Idle" condition, as this does not affect the possibility of configuring and protecting Time-Slot Interchange traffic: any ring switch action involves, in fact, the previous squelching of the whole extra-traffic at the corresponding termination nodes and the subsequent use of all the low priority channels for the high priority traffic protection operations.

In the figures concerned with two-fiber rings, the working capacity (consisting of high-priority channels or HP channels) has been indicated by half-arrows bordered by a bolt line in the arrows representing the connections between the ring nodes; whereas the protection capacity (consisting of low-priority channels or LP channels has been represented by half-arrow bordered by a broken line.

In the figures concerned with four-fiber rings, the working fibers otherwise known as "high-priority channels" or "HP channels") have been indicated by solid line arrows whereas the protection fibers (otherwise known as "low-priority channels" or "LP channels") have been indicated by broken line arrows.

Clearly, the present invention is applicable both to unidirectional paths and to bi-directional paths that are considered as two separate unidirectional paths. Moreover, the present invention is applicable also in rings wherein the traffic subjected to TSI, is configured with "(AU-4) channel concatenation".

The ring used to describe the invention comprises, both in the two-fiber scheme and in the four-fiber one, six network elements or nodes, indicated by blocks, and numbered with respective reference numerals (from 1 to 6). The West (W) and East (E) sides of every node are indicated. The term "span" will be used hereinafter to refer a fiber length between two nodes, for instance between nodes 1 and 2 or the one between nodes 5 and 6.

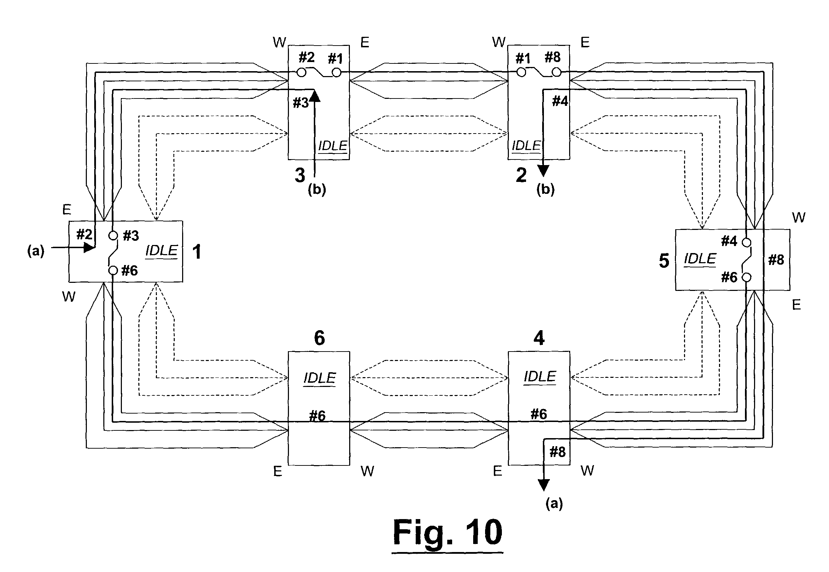

In the various figures, one or two paths, path (a) and path (b), have been installed, by way of a non-limiting example. The paths have been depicted by a bolt solid line and by arrows to indicate the direction of the traffic and therefore the nodes at which the paths are inserted or dropped. For instance, in Fig. 10, path (a) is inserted at node 1 and dropped at node 4; path (b) is inserted at node 3 and dropped at node 2.

Finally, it has been tried to clearly indicate (with numbers after the symbol "#") the various time slots in which the various paths are allocated, span by span. In has been also indicated if a Time-Slot Interchange (TSI) takes place at a node or if that node allows that path to transit without changing the AU-4 on which it is allocated.

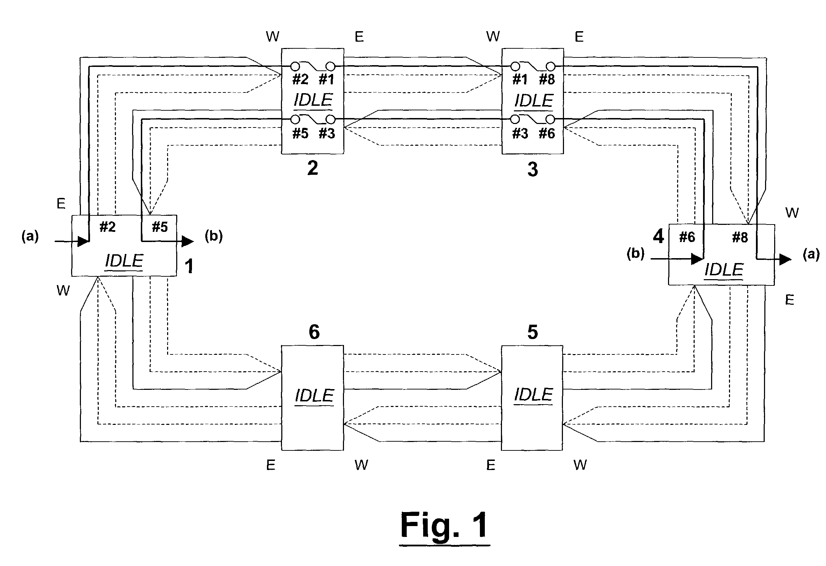

Consider first the event of single failure in a two-fiber ring network (Figs. 1 to 3). In a free-of-failure condition (Fig.1), a first unidirectional path (path (a)) is inserted in the ring at node 1 and allocated on the HP AU-4#2; at node 2 an allocation change from HP AU-4#2 to HP AU-4#1 takes place; at node 3 another allocation change from HP AU-4#1 to HP AU-4#8 takes place; finally, the path (a) is dropped from the ring at node 4. Similarly, a second unidirectional path (path (b)) is inserted in the ring at node 4 and allocated on the HP AU-4#6; at node 3 an allocation change from HP AU-4#6 to HP AU-4#3 occurs, at node 2 another allocation change from HP AU-4#3 to HP AU-4#5 occurs; finally, the path (b) is dropped from the ring at node 1. All nodes are in the Idle status.

As it is known, the management of failures in synchronous (SDH or SONET) telecommunications networks takes place, for some types of protection, among which the MS-SPRING one, through bytes K1 and K2 of the frame overhead. Since the present invention is not specifically concerned with such K1 and K2 bytes, a more precise description thereof will not be given herein, the reader having the possibility to refer to the relevant Recommendations, for instance Recommendation ITU-T G. 841, incorporated herein by reference.

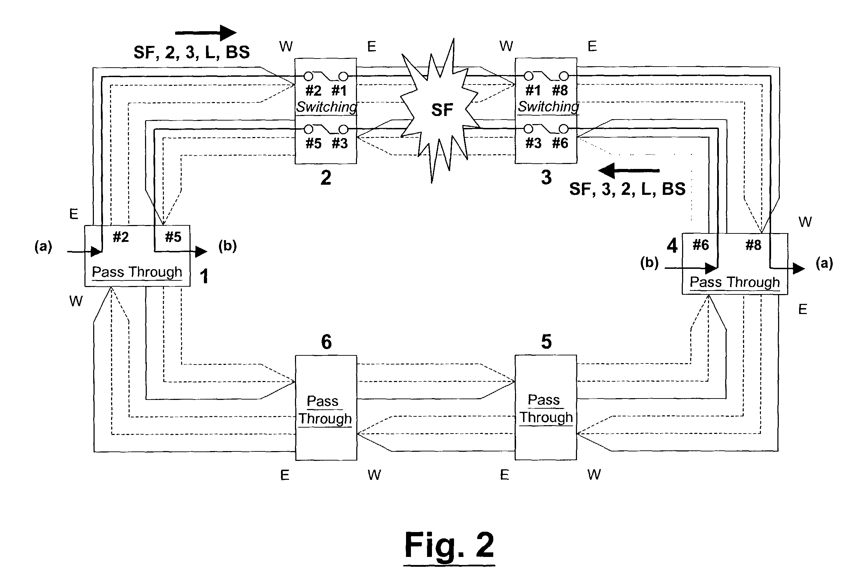

Assume a ring failure (SF) occurs in the span 2-3 of the ring. Therefore, nodes 2 and 3 become the switching nodes and enter the switching status. The switching nodes 2 and 3 will issue proper signaling that travel down the ring in opposite directions. Finally, according to Recommendation ITU-T G.841, the APS signaling concerning the failure SF will contain the Bridge & Switch (BS) status code and become SF,2,3,L,BS and SF,3,2,L,BS (Fig. 2). As is known, the meaning of the various signaling fields is the following: Signal Fail, Destination Node ID, Source Node ID, Path Length, Protection Status.

The Bridge & Switch action is performed as usual by the switching nodes 2 and 3 while the other nodes of the ring put themselves in the Pass-Through status and realize the Pass-Through of the low-priority (LP) AU-4s.

According to the present invention, in the event of single failure in a two-fiber ring network protected by a classical or terrestrial MS-SPRING protection mechanism, the Bridge & Switch action is performed by substantially utilizing the low-priority channel corresponding to the high-priority channel allocated on the span affected by the failure. The selection rule of the LP AU-4 to be utilized for the protection can be summarized as follows: given an STM-n ring line signal, where "n" is the overall number of the handled channels, "HP channels" being those channels from 1 to n/2 and "LP channels" being those channels from n/2+1 to n, there results that LP AU-4#X_{LP} = LP AU-4# (X_{HP}+n/2), where X_{HP} is just the index of the HP AU-4 in the span affected by a failure.

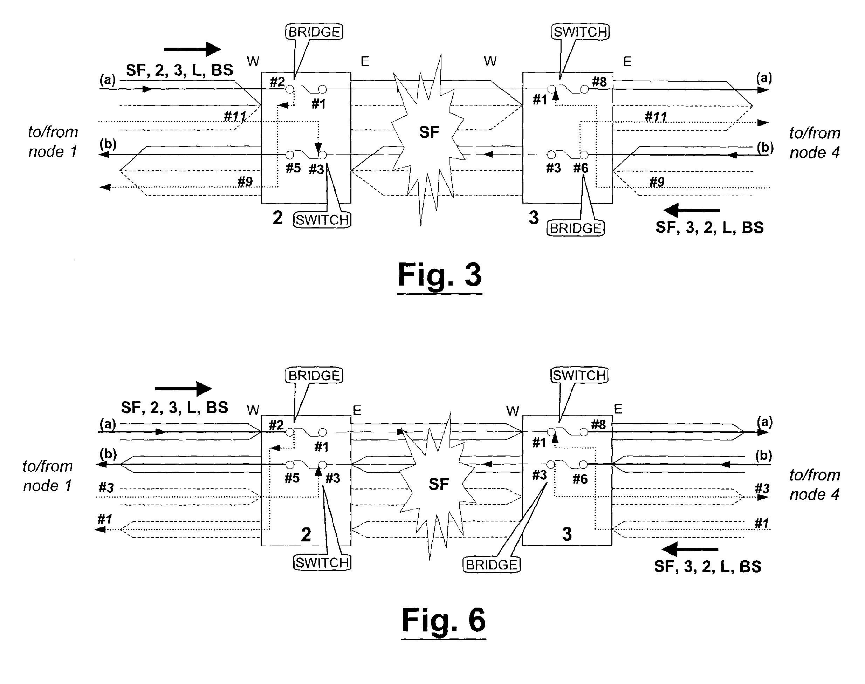

With reference to Fig. 3, the path (a), that in the span affected by SF is allocated on the AU-4#1, will be allocated on the AU-4#9. Similarly, the path (b), that in the span affected by SF is allocated on the AU-4#3, will be allocated on the AU-4#11. Conventionally, in fact, in an STM-16 ring the AU-4s from #1 to #8 are those of the HP traffic whereas those from 9 to 16 are those of the LP traffic.

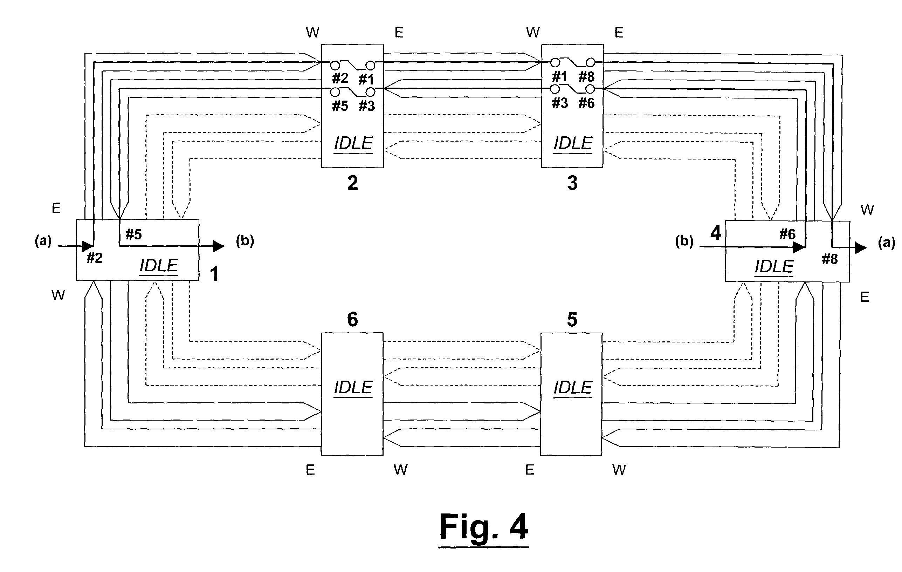

Now consider the event of single failure in a four-fiber ring network (Figs. 4 to 6). The faultless scenario (Fig. 4) is similar to the one of Fig. 1: a first unidirectional path (path (a)) is inserted in the ring at node 1 and allocated on the HP AU-4#2; at node 2 an allocation change from HP AU-4#2 to HP AU-4#1 occurs; at node 3 another allocation change from HP AU-4#1 to HP AU-4#8 occurs; path (a) is dropped from the ring at node 4. Similarly, a second unidirectional path (path (b)) is inserted in the ring at node 4 and allocated on the HP AU-4#6; at node 3 an allocation change from HP AU-4#6 to HP AU-4#3 occurs, at node 2 another allocation change from HP AU-4#3 to HP AU-4#5 occurs lastly, the path (b) is dropped from the ring at node 1. All nodes are in the Idle status.

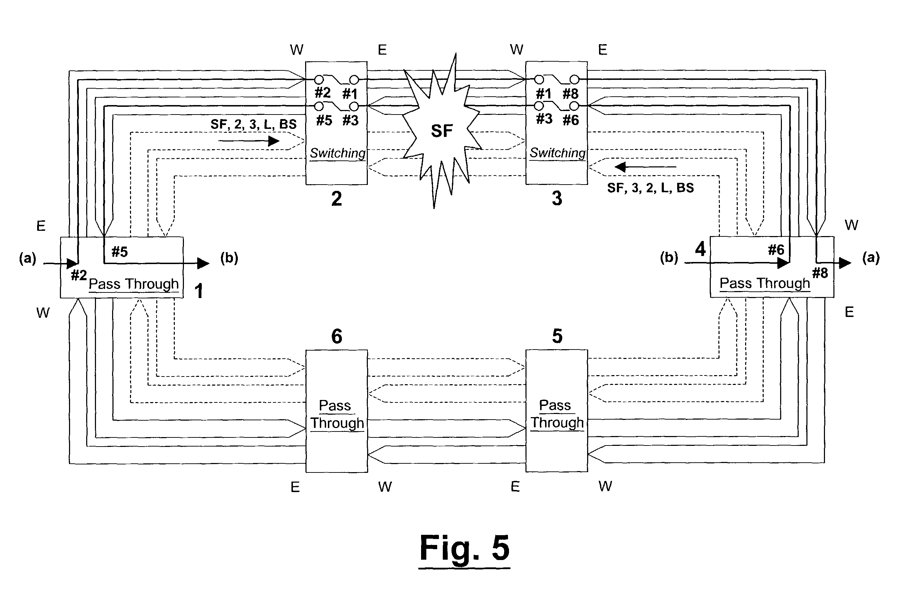

Suppose that a ring failure (SF) occurs in span 2-3 of the ring. Therefore, nodes 2 and 3 become switching nodes and enter the switching status. The switching nodes 2 and 3 will issue proper signalings that travel down the ring in opposite directions. According to the Recommendation ITU-T G.841, the APS signaling concerning the failure SF will at last contain the Bridge & Switch (BS) status code and become SF,2,3,L,BS and SF,3,2,L,BS (Fig. 5).

As usual, the Bridge & Switch action is performed by the switching nodes 2 and 3 while the other nodes of the ring put themselves in the Pass-Through status and realize the Pass-Through of the low-priority (LP) AU-4s through the protection line.

According to the present invention, in case of single failure in a four-fiber ring network protected by a classical or terrestrial MS-SPRING protection mechanism, the Bridge & Switch action is performed by utilizing the low-priority channel corresponding to high-priority channel allocated in the failured span. The rule for selecting the LP AU-4 to be utilized for the protection can be summarized as follows: given an STM-n ring line signal, where "n" is the overall number of the handled signals, both on working fibers (HP channels) and on protection fibers (LP channels), there results that LP AU-4#X_{LP} = HP AU-4#X_{HP}, where X_{HP} is just the index of the HP AU-4 in the failured span.

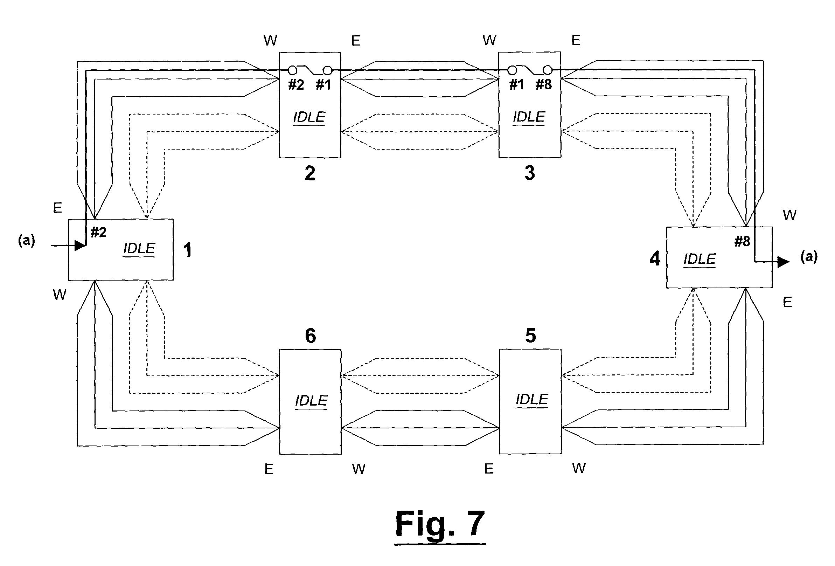

In other words (Fig. 6), the path (a), that in the span affected by SF is allocated on the HP AU-4#1, will be allocated on the LP AU-4#1. Similarly, the path (b), that in the span affected by SF is allocated on the HP AU-4#3, will be allocated on the LP AU-4#3.

In order to illustrate the case of a plurality of failured spans, with consequent isolation of one or more network elements, a "generic" representation (valid both for two-fiber rings and for four-fiber rings) will be utilized. The connection between nodes has been represented in a bi-directional manner. Moreover, in order to facilitate the understanding of the various figures, only one installed path (path (a)) is shown. The path (a) is inserted at node 1 and allocated on the AU-4#2; at node 2 an allocation change from AU-4#2 to AU-4#1 occurs, at node 3 an allocation change from AU-4#1 to AU-4#8 occurs the path (a) is terminated at node 4. In a faultless condition, all the nodes are in the "Idle" status.

Suppose that a first failure SF1 occurs in the span 1-2; nodes 1 and 2 become switching nodes. Assume that a second failure SF2 occurs in the span 2-3: also node 3 becomes a switching node. Node 2 will become isolated from the rest of the ring. The switching nodes 1 and 3 will send corresponding APS signaling toward node 2 with corresponding bridge requests for SF1 and SF2: once both receive a bridge request for node 2, the isolation of node 2 is acknowledged.

Thus, the ring network is subdivided into two sub-networks, a first sub-network (sub-network A) comprising all the nodes except the isolated node 2 and a second sub-network (sub-network B) comprising node 2.

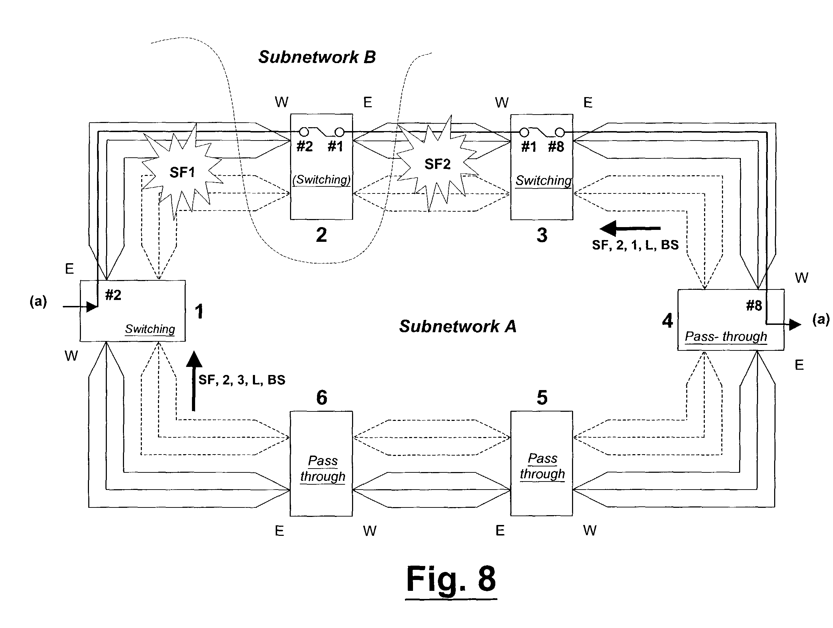

Therefore, switching nodes verify if the termination nodes of the path that passes through the isolated node belong to the first or to the second sub-network, namely if they are able to communicate with them. This check is carried out by comparing the failure position (known on the basis of the declared switching criteria and of the received APS signaling) with the configuration data that carry the information of the whole TSI path allocation in the ring. Further, it is necessary for all the nodes involved in the TSI path allocation to be aware of the whole allocation of the path itself. Such information can be provided to the node, in the form of a table (the so-called Permutation Table) configurable during traffic installation. In the example illustrated in Fig. 8, the termination nodes of path (a), that passes through isolated node 2, belong to sub-network A: the path must be protected by using, on the basis of a criterion, defined in advance, the LP channel associated with the HP channel utilized for the allocation of the path itself in one of the two paths affected by a failure.

Some of the possible criteria for choosing the LP channel with which to perform the path re-routing are the following;
i) the LP channel related to the span affected by a failure which is adjacent to the switching node with higher/lower identification;
ii) the LP channel related to the span affected by a failure which is adjacent to the switching node coming first/last in the ring map; or
iii) the LP channel related to the span affected by a failure which is adjacent to the switching node that is far East or far West in the ring.

It is to be noted that in the event of multiple failure (more than two ring failures) the choice of the span to be considered for the determination of the LP channel to be utilized, will affect, according to the above criteria, the two failured spans adjacent to the switching node able to communicate with the termination nodes of the path to be protected.

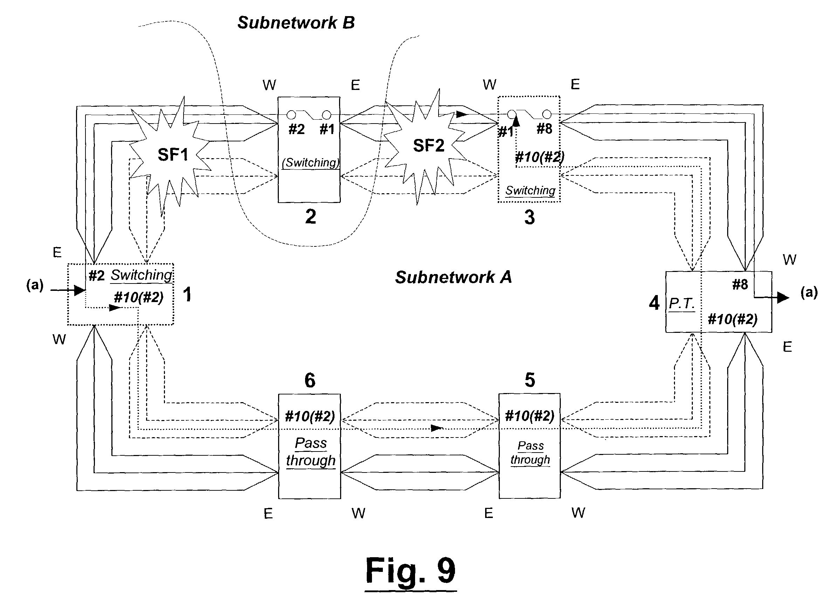

Suppose, by way of example and not of limitation, to adopt the criterion i). The switching nodes that must perform the BR&SW action are the nodes 1 and 3 that belong both to the sub-network A. The switching node with lower identification is node 1; the failured span which is adjacent to the switching node with lower identification is therefore span 1-2; the path (a), in the span 1-2 is allocated on the HP AU-4#2. Therefore, in the case of a two-fiber classical ring, the LP AU-4#(2+8) i.e. the LP AU-4#10 shall be utilized for the re-routing, whereas in the case of a four-fiber classical ring, the LP AU-4#2 shall be utilized for the re-routing in accordance with the principles set forth for the single failure. In Fig. 9, the route of the re-routed path has been indicated with a broken line. The index of the AU-4 related to a four-fiber ring has been indicated in parenthesis.

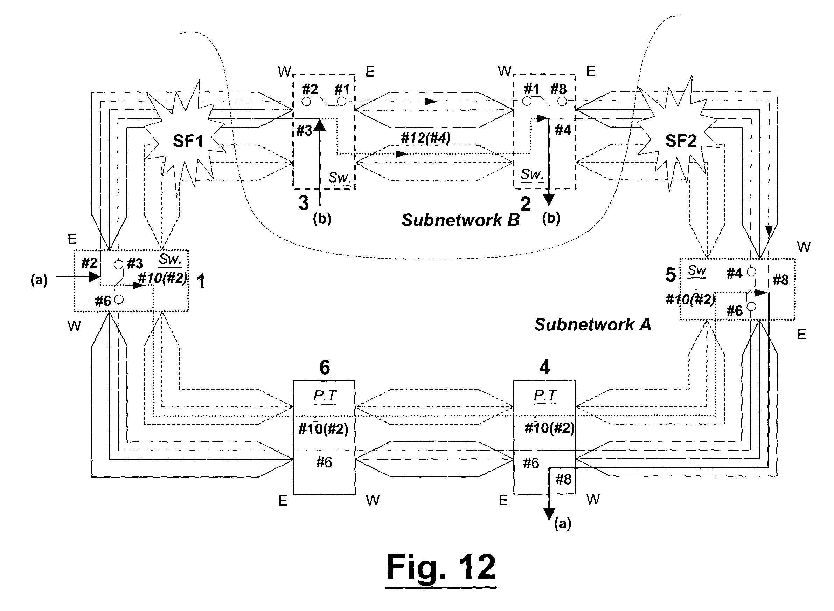

Now suppose to consider a situation with more than two isolated nodes (as a result of two or more failures). Please refer to Figs. 10 to 12 in which the same representation of Figs. 7 to 9 is utilized. Let two paths (path (a) and path (b)) be installed in the ring with TSI at nodes 3 and 2 (for path (a)) and at nodes 1 and 5 (for path (b)). In order to render the description more generic, the numbering of the nodes is not in the usual progressive order. In the faultless condition all the nodes are in the Idle status.

The occurrence of two failures (SF1, SF2) in spans not adjacent to the same node results in the isolation of two nodes (3 and 2). The resulting sub-networks which are in this way defined are sub-network A, comprising nodes 1, 4, 5 and 6, and sub-network B, comprising nodes 2 and 3.

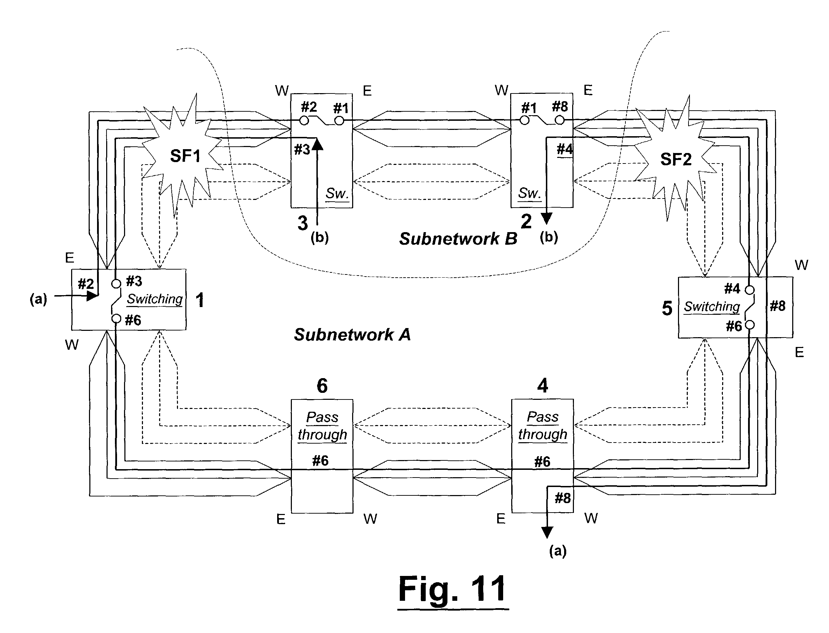

The next step consists in identifying the position of the termination nodes of each path and checking that both the termination nodes of each path belong to one or to the other sub-network. In the case of Fig. 11, both the termination nodes (1, 4) of path (a) belong to sub-network A and both the termination nodes (2, 3) of path (b) belong to sub-network B: both paths can be saved notwithstanding the two failures and the TSI at the nodes.

As far as the choice of the span to which reference shall be made to identify the LP AU-4 to be utilized for the re-routing is concerned, suppose again to use, merely by way of example and not of limitation, the above criterion i).

For path (a), sub-network A, the switching nodes are nodes 1 and 5. The switching node with lower identification is node 1. Therefore, the failured span that is adjacent to the switching node with lower identification is span 1-3. In span 1-3 the path (a) was originally allocated on the HP AU-4#2. Therefore, in the case of a two-fiber ring, the path (a) will be re-routed by utilizing the LP AU-4#10 while in the case of a four-fiber ring, the path (a) will be re-routed by utilizing the LP AU-4#2, similarly to the criteria set forth for the single failure.

For path (b), sub-network B, the switching nodes are nodes 2 and 3. The switching node with lower identification is node 2.The failured span that is adjacent to the switching node with lower identification is therefore the span 2-5. In span 2-5 the path (b) was originally allocated on the HP AU-4#4. Therefore, in case of a two-fiber ring, path (a) will be re-routed by utilizing the LP AU-4#12 while in the case of a four-fiber ring, the path (a) will be re-routed by utilizing the LP AU-4#4, similarly to the criteria set forth for the single failure.

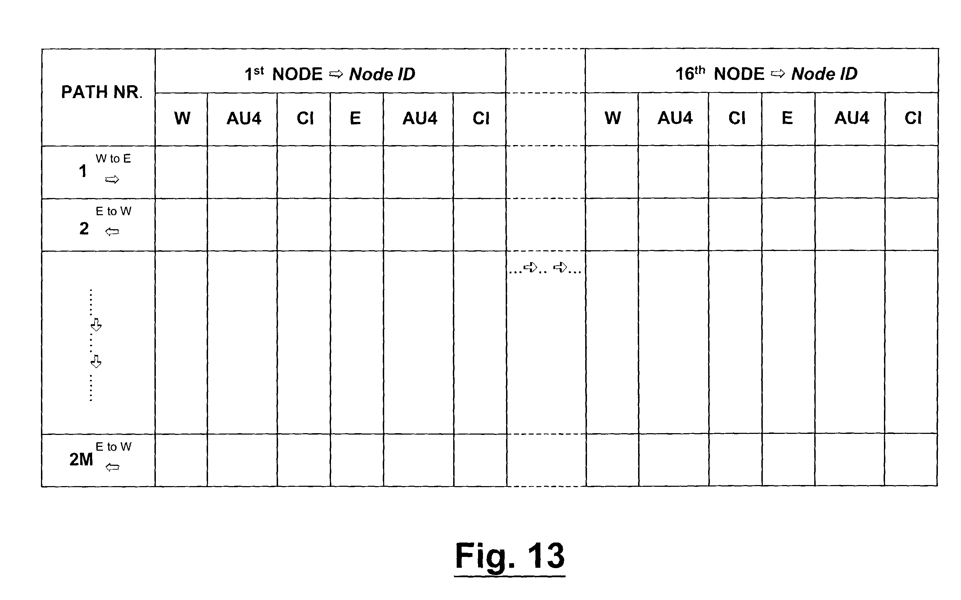

Fig. 13 illustrates a possible representation of the above-mentioned table, labeled "Permutation Table". The sequence and the arrangement of information contained in such a permutation table may naturally depart from those indicated in the provided representation. The table comprises 2M rows, where M is the number of HP AU-4s carried by the generic STM-n line signal and the duplication relates to the two possible directions of allocation of the single unidirectional path in the ring. The first column, identified as "PATH NR", indicates the path number and the direction (from W to E or from E to W). The following columns are related to every node of the ring (1^{st} NODE to 16^{th} NODE) associated with which is the respective node identification (NODE ID). Provided for each node is information concerning the fact that a certain path, at that node, is Dropped (D), Inserted (I) or is allowed to transit (PT), concerning the AU-4 on which the path in question is allocated (column AU-4 values from 1 to M) and concerning any possible concatenation may be present (column Cl). This information is provided for each node, distinguishing between East side and West side.

Each node involved in the TSI path allocation, if requested to act as switching node, having the possibility to look at such a table, is able to make the aforesaid considerations on identification of the spans affected by a failure, definition of the sub-networks, identification of the restorable paths, choice of the reference spans, identification of the reference HP AU-4, and choice of the corresponding LP AU-4s for the re-routing.

In view of the above detailed description, related to some cases of single or double failure, the person skilled in the art can easily devise the actions that each node must perform in the event of failure on other spans and/or in the event that more than two failures occur. Naturally, the present invention applies to all these cases and its scope covers all these cases and is limited only by the following claims.

As far as the practical realization is concerned, it will be understood that the actions performed by every node or network element are the known Pass-Through, Bridge and Switch and transmission of substantially known signaling, actions. Therefore, the implementation of the present method does not require to change the physical structure of the existing network elements utilized in ring networks protected against possible failures. The only modifications must be carried out at level of consequent actions performed by the nodes affected by the protection mechanism, according to the signaling already provided for and present in the standardized protocol and on the ground of ring map information, already provided and processed, as well as of additional information (see "Permutation Table") carrying the time-slot allocation information, in every ring span of the single installed path subjected to Time-Slot Interchange.

It is finally pointed out that, although the present invention has been described in detail with reference to SDH synchronous transmissions, it applies, in similar manner, to other types of synchronous transmissions, typically SONET. The fact that this type of signals has not been taken in account in the description shall not be interpreted in a limiting sense, but as purely illustrative and with the aim to render the description clear. Therefore, for the purposes of the present description and of the appended claims, the terminology used for SDH transmissions will include at least the corresponding SONET terminology and shall be read in this perspective.

## Claims

1. Method of re-routing a path in a terrestrial MS shared protection ring network in the event of a failure (SF1) in a span of said path, said ring network comprising network elements connected in a ring configuration through fiber spans, said fiber spans comprising high-priority (HP) channels and low-priority (LP) channels, said method comprising the step of performing a ring switch action by the MS shared protection mechanism, **characterized in that** a Time Slot Interchange mechanism (TSI) is provided in said ring network and **in that** said method comprises the step of re-routing the Time-Slot Interchange (TSI) path over the time slot of the low-priority (LP) channels corresponding to the time slot of the high-priority (HP) channels of the failured span.

2. Method according to claim 1, in which a further span is affected by a failure (SF2), the method being **characterized by** the step of selecting one of the two failured spans and by the step of re-routing the Time-Slot Interchange (TSI) path over the time slot of the low-priority (LP) channels corresponding to the time slot of the high-priority (HP) channels of the selected failured span.

3. Method according to claim 1 or 2, in which said terrestrial MS shared protection ring network is a two-fiber network, the method being **characterized in that** the step of re-routing the Time-Slot Interchange (TSI) path over the time slot of the low-priority (LP) channels comprises the step of re-routing the path over the low-priority (LP) channels with the index given by the sum of half overall number (n) of handled channels and the index of the time slot of the high-priority (HP) channels allocated on the failured span or on the selected failured span.

4. Method according to claim 1 or 2, in which said terrestrial MS shared protection ring network is a four-fiber network, the method being **characterized in that** the step of re-routing the Time-Slot Interchange (TSI) path over the time slot of the low-priority (LP) channels comprises the step of re-routing the path over the time slot of low priority channels with index corresponding to the index of the time slot of the high-priority (HP) channels allocated on the failured span or on the selected failured span.

5. Method according to any of the claims 2 to 4, **characterized in that** the step of selecting one of the two failured spans comprises the step of selecting the failured span adjacent to the switching node with higher/lower identification.

6. Method according to any of the claims 2 to 4, **characterized in that** the step of selecting one of the two failured spans comprises the step of selecting the failured span adjacent to the switching node that comes first/last in the ring network map.

7. Method according to any of the claims 2 to 4, **characterized in that** the step of selecting one of the two failured spans comprises the step of selecting the failured span adjacent to the switching node far East/West in the ring network.

8. Method according to any of claims 2 to 7 **characterized by** comprising the additional steps of: subdividing the ring network into two sub-networks (A, B), a sub-network (B) comprising the at least one node that has become isolated by the failures (SF1, SF2), the other sub-network (A) comprising the other nodes of the ring network, and checking whether the path can be re-routed by evaluating if both the corresponding termination nodes belong to one or to the other sub-network (A, B).

9. Method according to any of the preceding claims, **characterized by** comprising the additional step of providing all the network elements involved in the Time-Slot Interchange path allocation with information concerning the whole path allocation in the ring, namely in which node the TSI path is Dropped (D), Inserted (I) or is made to transit (PT), on which time slot the path in question is allocated (1,...M) and concerning possible concatenations present (Cl), distinguishing between East side (E) and West side (W).

10. Network element of a terrestrial MS shared protection ring network, said ring network comprising other network elements connected in a ring configuration through fiber spans, said fiber spans comprising high-priority (HP) channels and low-priority (LP) channels, said network element comprising means for performing ring switch actions, namely pass-through, bridge or switch actions, upon receipt of corresponding signalings and means for generating and sending proper signalings upon receipt of corresponding signalings, a path being installed in said ring network, **characterized in that** a time slot interchange mechanism (TSI) is provided in said ring network and **in that** said network element comprises means for, in the event of a failure on a span of the installed path, re-routing the path over the time slot of the low-priority (LP) channels corresponding to the time slot of the high-priority (HP) channels of the failured span.

11. Network element according to claim 10, in which a further span becomes affected by a failure, **characterized in that** it further comprises means for selecting one of the failured spans and means for re-routing the path on time slot of low priority (LP) channels corresponding to high priority (HP) channel time slots of the selected failured span.

12. Network element according to claim 10 or 11, in which said terrestrial MS shared protection ring network is a two-fiber network, the network element being **characterized in that** the means for re-routing the path over the time slot of the low-priority (LP) channels comprise means for re-routing the path over the time slot of the low-priority (LP) channels with index given by the sum of half the overall number (n) of the handled channels and the index of time slot of the high-priority (HP) channels allocated on the failured span or on the selected failured span.

13. Network element according to claim 10 or 11, in which said terrestrial MS shared protection ring network is a four-fiber network, the network element being **characterized in that** the means for re-routing the path over the time slot of the low-priority (LP) channels comprise means for re-routing the path over the time slot of the low-priority (LP) channels with index corresponding to the index of time slot of the high-priority (HP) channels allocated on the failured span or on the selected failured span.

14. Network element according to any of the claims 10 to 13, **characterized by** comprising means for causing all the network elements involved in the TSI path allocation to have information concerning the whole allocation of the path in the ring, namely at which node the TSI path is Dropped (D), Inserted (I) or is allowed to transit (PT), on which time slot the path in question is allocated (1,...M) and concerning possible concatenations (Cl) that may be present, distinguishing between East side (E) and West side (W).
